# EUROPEAN PATENT APPLICATION

(11) **EP 1 845 059 A1**
(43) Date of publication of application: **17.10.2007**
(21) Application number: 06007850.8
(22) Date of filing: 13.04.2006
(51) Int. Cl.: B81B 3/00, G01N 27/00

(54) **Micro-electromechanical sensor device**

(71) Applicant: MAX-PLANCK-GESELLSCHAFT ZUR FÖRDERUNG DER WISSENSCHAFTEN E.V., 80539 München (DE); Surface Imaging Systems, 52134 Herzogenrath (DE); Ruprecht-Karls-Universität Heidelberg, 69117 Heidelberg (DE)
(72) Inventor: Berger, Rüdiger, 55262 Heidesheim (DE); Helm, Mark, 69124 Heidelberg (DE); Saurenbach, Frank, 52066 Aachen (DE)
(74) Representative: Hertz, Oliver

(57) **Abstract**

A sensor device (100) comprises a holding body (10), at least one deflectable sensor element (20) fixed to the holding body (10), and a sensor array (30) with a plurality of sensitive layers (31) arranged on a surface (21) of the at least one sensor element (20), wherein each of the sensitive layers (31) is adapted to couple at least one probe substance to be sensed, wherein the at least one sensor element (20) has a spring constant below 5 N/m. Furthermore, a measuring device comprising the sensor device and a method of investigating a sample for sensing at least one probe molecule in the sample are described.

## Description

The present invention relates to a sensor device comprising at least one sensor element with a plurality of sensitive layers, in particular to a micro-electromechanical sensor (MEMS) device with at least one sensor element being deflectable in response to a coupling of a probe substance to a sensitive layer of the sensor element. Furthermore, the present invention relates to a measuring device for sensing probe substances, which measuring device includes the above sensor device. Furthermore, the present invention relates to a method of investigating a sample for sensing at least one probe molecule using the above sensor and measuring devices. The invention can be used for sensing probe substances in physics, chemistry, biology and applied techniques.

The application of MEMS devices is generally known in particular in the field of molecular biology for sensing or investigating biologically relevant molecules. Typically, MEMS devices include a cantilever element carrying a sensitive layer. Mechanical or geometric properties of the cantilever are changed in response to an interaction of a probe substance with the sensitive layer. Basic features of MEMS devices are described e.g. by R. Raiteri et al. in "Materials Today", vol. 5, January 2002, p. 22-29.

A first operation principle of MEMS devices is based on measuring a bending or deflection of the cantilever in response to a surface stress caused by the interaction of the probe substance with the sensitive layer (see e. g. L. A. Pinnaduwage et al. in "Sensors and actuators", vol. B99, 2004, p. 223-229). The deflection of the cantilever is optically measured e.g. with a beam deflection technique. The measurement of cantilever deflection has an essential advantage in terms of increased sensitivity. Even a few molecules of a probe substance are capable to induce the surface stress and bending of the cantilever. Furthermore, as the deflection method is a static technique, the substance sensing can be applied without restrictions in vapours as well as in liquids. However, there is a disadvantage as simultaneous quantitative sensing of different molecules is difficult with the conventional deflection measurement.

For simultaneous investigating a plurality of different molecules, the use of cantilever arrays has been proposed (see e.g. S. Yeon et al. in "Applied Physics Letters", vol. 85, 2004, p. 1083-1084). The cantilever array comprises a plurality of cantilevers fixed to a common holding body. Each cantilever carries one sensitive layer with a specific sensitivity for a particular probe substance. If a so-called pattern recognition technique is applied for analyzing the cantilever bending, the number of substances detected with the cantilever array can be larger than the number of cantilevers. However, the number of cantilevers forming one common array is restricted due to the available micromachining techniques. Furthermore, while cantilever arrays can be produced with increasing numbers of cantilevers (e.g. more than 100), the optical beam deflection measurement of the cantilever bending would require multiple measurements with multiple sensors for obtaining a sufficient precision and reproducibility of substance sensing.

Furthermore, 2-dimensional cantilever arrays have been described (see e.g. M. Yue et al. in "Journal of Micro-electromechanical Systems", vol. 13, 2004, p. 290-299). 2-dimensional cantilever arrays have disadvantages in terms of the complex micro-mechanical manufacturing of 2-dimensional rows of sensors and optical detection of the cantilever bending.

M. Helm et al. have proposed an improved optical measurement for cantilever-based sensors, wherein interferometry was applied for measuring cantilever bending ("Applied Physics Letters" vol. 87, 2005, p. 064101). A single cantilever sensor was arranged in one arm of a phase shift interferometer. An interference pattern on the cantilever surface was measured with a CCD camera and evaluated for calculating the curvature of the cantilever in response to coupling of a probe substance. The application of the phase shifting interferometry by M. Helm et al. represents an important advantage for high sensitivity deflection measurements. M. Helm et al. have measured deflections smaller than 2 nm. However, the conventional interferometry technique was restricted to the measurement in air with one single cantilever so that a simultaneously measurement of a plurality of substances was impossible.

Another operation principle of conventional cantilever-based sensors comprises a dynamical measurement of a resonance frequency of the cantilever, which is changed in dependence on a mass loading at the apex of the cantilever. The operation of the cantilever as a precise balance is given for substances sensing in a gaseous atmosphere. This restriction represents an essential disadvantage in particular for applications in biology, as the biologically relevant molecules are typically available in liquids. For obtaining a sufficient precision in substance sensing, the dynamical measurement requires a high resonance frequency (typically 100 kHz or higher) of the cantilever. Accordingly, a cantilever has to be used having a high spring constant.

US 5 719 324 discloses a MEMS device with a cantilever sensor element carrying a sensor array with up to three layers being sensitive for different probe substances. The sensitive layers are arranged along the length of the cantilever at particular positions selected for a response at the fundamental resonance frequency, the second harmonic or third harmonic, respectively. Mass loading at the different sensitive layers is measured by exciting the fundamental and harmonic frequencies and monitoring the damping of the cantilever at the various frequencies.

Due to the following essential disadvantages, the technique according to US 5 719 324 has not found a practical application. Firstly, the operation of the MEMS device is limited to a gaseous atmosphere. Furthermore, the resonance properties of the cantilever are read-out sequentially with the conventional technique. Accordingly, a real multiplex operation with parallel measurements is impossible. Furthermore, the contributions of the different sensitive layers cannot be measured separately. The cross-talk of the sensitive layers represents a serious limitation for the specific detection of different molecules. In particular, the sensitive layer of the array adjacent to the holding body provides a contribution in all frequency ranges.

All conventional techniques for probe substance sensing have an essential disadvantage with regard to the restricted multiplex capability. In practice, there is an interest in exposing a plurality of sensitive layers (more than 100 or even more than 1.000) to an analyte for simultaneous sensing a plurality of different molecules.

The object of the invention is to provide an improved sensor device avoiding the disadvantages of the conventional techniques and being capable to sense a plurality of probe substances, wherein the sensor device allows the simultaneous detection of an increased number of probe substances with high sensitivity and reproducibility. In particular, the object of the invention is the provision of the sensor device including a plurality of sensitive layers, which can be read out with reduced cross-talk. Furthermore, the object of the invention is the provision of an improved measuring device avoiding the disadvantages of the conventional operation principles for reading-out sensor elements and being capable for an improved detection of a sensor element deflection with increased precision and reproducibility. Furthermore, the object of the invention is to provide an improved method of investigating an analyte sample for sensing at least one probe molecule in the sample.

These objects are solved with sensor and measuring devices and methods comprising the features of claims 1, 19 or 25, respectively. Advantageous embodiments of the invention are defined in the dependent claims.

According to a first aspect, the present invention is based on the general technical teaching of providing a sensor device with at least one sensor element carrying a plurality of sensitive layers each of which being capable for a physical of chemical interaction with at least one probe molecule, wherein, after an interaction-induced change in surface stress at one or more of the sensitive layers, the sensor element is locally deformable. To this end, the material and geometry of the at least one sensor element is selected for providing a spring constant below 5 N/m at least in the direction of bending the sensor element in response to a change in surface stress induced by the respective sensitive layer. The inventors have found that a spring constant below the 5 N/m limit is particularly suitable for high sensitive substance sensing with a sensor element bending along a sensitive layer of about 1 nm.

According to the invention, the local deformation is provided for each portion of the sensor element carrying one of the sensitive layers independently on the surface stress conditions at the remaining portions of the sensor element. The at least one sensor element has a surface contour, which is determined by the stress conditions at each of the sensitive layers.

The group of sensitive layers on one surface of the sensor element provide a sensor array. The inventors have found that the sensitive layers can be deposited on the surface with a pre-selected array pattern. Advantageously, there are no particular limitations with regard to the specific positions of the sensitive layers on the sensor element as the sensor device can be read-out by an optical measurement, in particular by an interferometric measurement with extremely high precision. In particular, the sensitive layer positions do not depend on mechanical vibration properties of the sensor element. Each region of the sensor element carrying one sensitive layer provides an independent sensor unit. The sensor units of one sensor element can be read out independently from each other.

The sensor device of the invention has another important advantage in that the complete surface of the at least one sensor element can be read-out with one single optical measurement only. Due to the local and specific bending of the sensor element at the positions of the sensitive layers, the conventional operation principle with the excitation of a series of vibration frequencies can be avoided. The sensor device of the present invention offers for the first time a parallel measurement at a plurality of sensitive layers arranged on one single sensor element, like a single micro-mechanical cantilever or membrane sensor element.

Manufacturing a micro-mechanical sensor device according to the invention comprises a deposition of a plurality of sensitive layers on a surface of a single micro-mechanical sensor element at positions, which are selected independently of vibration properties of the sensor element and in particular independently of the positions of nodes or antinodes of higher harmonics of sensor element vibrations.

Advantageously, the sensor device according to the invention allows a simple adaptation to an increased number of substances to be detected. An increased number of substances can be detected without increasing the number of sensor devices but rather with one single sensor device of the invention equipped with a plurality of sensitive layers.

Advantageously, there are no limitations with regard to the geometric arrangement of the sensitive layers relative to each other. If the sensitive layers are arranged as a one-dimensional series, e.g. as a straight row, particular advantages can be obtained in terms of using conventional micro-mechanical cantilever structures being adapted for a static read-out of the cantilever deflection. Alternatively, the sensor array may comprise a two-dimensional arrangement of sensitive layers, which advantageously increases the number of parallel readable local deflections.

In contrast to the conventional MEMS device with a sensor array, the sensor device of the invention can be operated under various environmental conditions, in particular in gases or liquids. According to a preferred embodiment of the invention, the sensor device comprises a calibration structure, which is carried by a component of the sensor device, like e.g. a holding body or the at least one sensor element. The calibration structure is a solid component with a predetermined three-dimensional geometrical structure, like e.g. a step. The provision of the calibration structure allows a compensation of variations in the refractive index with changing environments of the sensor element, like with exchanging of liquids or gases or with a changing illumination angle during interferometric deflection measurement. Preferably, the calibration structure is integrated on a micro-mechanical chip providing the sensor device. It facilitates the imaging interferometry for reading-out the sensor element deflections. Furthermore, the calibration structure facilitates the adjustment of the sensor device in a measuring device for optically reading the sensor element deflections.

If, according to a further preferred embodiment of the invention, the sensor device comprises a deflection device being capable to compensate local deformations of the at least one sensor element, the sensitivity of the sensor device can be essentially increased. Sensor elements, like cantilever sensor elements or membrane sensor elements have a maximum sensitivity, if they are not deflected or bent. The deflection device is arranged for compensating each local surface stress of the sensor element so that the sensor element is not bent even with an interaction with one or more probe substances. Advantageously, any operation parameter of the deflection device like e.g. an electrical current for locally operating the deflection device can be used for reading-out the sensor device of the invention.

Preferably, the deflection device is operated on the basis of at least one of the following techniques. With a heating deflection device, a local heating of the sensor element is generated for compensating the local surface stress. With a magnetic field deflection device, any surface bending of the sensor element can be compensated with locally effective magnetic fields. The corresponding effect can be obtained with an electrostatic field deflection device. Mechanic deflection compensation can be provided with an actuator deflection device or a pressure deflection device, which are capable of subjecting the sensor element to a local mechanical driving force.

Another advantage of the invention is given by the variability in fixing the at least one sensor element to a holding body, like e.g. a chip body of a micro-mechanical frame. According to a first variant, the at least one sensor element or preferably a plurality of sensor elements are fixed only with one base portion to the holding body. Advantageously, conventional multi cantilever chips can be used for manufacturing such a sensor device. According to a second variant, the at least one sensor elements or preferably a plurality of sensor elements are fixed with at least two side portions to the holding body. Preferably, the sensor element is fixed with side portions opposite to each other. With this embodiment, the holding body has a frame shape wherein the sensor elements are connected with opposite parts of the frame. According to a third variant, the holding body is a compact carrier block and the at least one sensor element is sandwiched on a surface of the carrier block. The carrier block has through-holes for providing a space, into which the sensor element can be bent. This embodiment has particular advantages in terms of stability and compact structure.

Further preferred embodiments of the invention are related to various shapes and arrangements of the at least one sensor element. Firstly, the sensor element can be provided with a strip shape, i.e. with a rectangular surface, the length of which being essentially larger than the width. The strip shape has an aspect ratio length : width of e. g. 100 µm to 10 µm. Preferably, a plurality of strip-shaped sensor elements are fixed to the holding body. Alternatively, the at least one sensor element has a membrane shape, i.e. a rectangular shape with similar length and width dimensions.

According to a particularly preferred embodiment of the invention, the at least one sensor element comprises at least one support structure, which is adapted for stabilising the sensor element with regard to at least one direction. Each support structure comprises a portion of the sensor element with an increased thickness. Preferably, the support structure comprises a web profile extending perpendicular to the longitudinal extension of the sensor element, e.g. the cantilever sensor element. Advantageously, with the support structure, the sensor element cannot be deflected perpendicular to the longitudinal extension thereof. Plane portions with a predetermined spring constant are formed between the support structures. Preferably, the sensor element carries the sensitive layers between the support structures.

For creating a predetermined environment, the sensor device is arranged in a sample chamber. According to a preferred embodiment of the invention, at least one wall of the sample chamber includes at least one transparent portion. Preferably, the sample chamber wall includes a transparent window. With this embodiment, the optical read-out of the sensor device is facilitated. According to a further preferred embodiment of the invention, the sample chamber forms a liquid-tight enclosure, so that the sensor device can be operated in a liquid environment. The sample chamber can be filled with a liquid being the analyte sample.

If at least one wall of the sample chamber is formed by the sensor device, advantages in terms of a compact and robust structure are obtained. Preferably, the holding body carrying the at least one sensor element forms one wall of the chamber.

As the sensor device is adapted for a static deflection measurement, there are no limitations with regard to the material of the at least one sensor element. In particular, the sensor element can be made of a semiconductor material, a ceramic, a polymer material or a combination thereof.

According to a particularly preferred embodiment of the invention, the at least one sensor element carries a sensor array with at least four, particularly preferred at least eight sensitive layers. With practical conditions, sensing of at least two different molecules is preferred. With two sensitive layers and two reference layers, this objective can be fulfilled with one single sensor element only.

Preferably, the sensor device of the present invention is provided with at least one of the following features. For an improved local bending, the spring constant preferably is below 2 N/m. With the available cantilever materials, the at least one sensor element has a preferred thickness below 2 µm and a preferred length above 400 µm. Advantageously, the size of the single sensitive layers can be selected in a range of 50 µm to 5 µm. The density of the sensor arrays can be increased compared with the conventional techniques.

According to a further advantageous embodiment of the invention, the sensor array comprises sensitive layers arranged on both surfaces of the at least one sensor element. Accordingly, the number of the sensitive layers on the sensor element can be increased. If the sensitive layers are arranged on the surfaces of the sensor element with a partial overlap relative to each other, further advantages can be obtained in terms of providing particular reference regions facilitating the evaluation of the sensor element bending.

According to a second general aspect, the present invention is based on the general technical teaching of providing a measuring device for sensing at least one probe substance, comprising the sensor device according to the invention and an optical profilometer device for optically measuring at least one deflection of the at least one sensor element of the sensor device. Preferably, the profilometer device is adapted for simultaneous measuring (imaging) all local deflections of the at least one sensor element. The inventors have found that available profilometer devices, like e. g. imaging interferometry or confocal microscopy devices, yield curvature patterns (e. g. interferogram or bending patterns) of a surface of the at least one sensor element, which can be evaluated with regard to all local deflections at the positions of the sensitive layers. An imaging profilometer device provides a simultaneous read-out of the local deflections. All sensor units can be measured simultaneously allowing a highly parallel measuring procedure. Advantageously, the local deflections are sensed in absolute quantities (radii of curvature), which allow a direct quantitative determination of the substance concentration.

Advantageously, there are no limitations with regard to the type of profilometer device used for reading-out the curvature patterns. As an example for imaging interferometry, white light interferometry or interferometry with a laser source emitting at one or more single laser wavelengths can be used. Using a laser source with multiple wavelengths has the advantage of detecting the sensor element deflection with increased precision. With confocal microscopy, e. g. a scanning microscope can be used.

If the sensor device comprises the above deflection device for compensating local deflections of the sensor element, the measuring device of the invention, preferably comprises a feedback loop for controlling the deflection device. Advantageously, the feedback loop provides a deflection device control such that each local bending of the sensor element is compensated automatically. Accordingly, the measuring device can be operated with maximum sensitivity.

If, according to a further preferred embodiment of the invention, the profilometer device is adapted for a simultaneous evaluation of the complete curvature pattern, all local deflections of all sensor elements of one sensor device can be obtained simultaneously. With this embodiment, the measurement speed is essentially increased. If additionally profiles, e. g. interferences or focus levels at the above calibration structure are detected, the absolute local deflections of the sensor element can be measured with improved precision. The absolute local deflections of the sensor element can be measured even with an exchange of the environment.

Preferably, the measuring device of the invention is provided with an image processing unit being adapted for calculating the local deflections of the sensor elements from the light curvature patterns measured at the sensor elements.

According to a third general aspect, the present invention is based on the general technical teaching of providing a method of investigating a sample for sensing at least one probe molecule, wherein the above sensor device according to the invention is subjected to the sample and the local deflections at each of the sensor elements of the sensor device are read-out with an optical profilometer device. The measurement of local deflections preferably comprises an image processing of curvature patterns, e. g. light interference patterns measured on one of the surfaces of the sensor element.

Further details and advantages of the invention are described in the following with reference to the attached drawings. The drawings show in:
- Figures 1A and 1B:: schematic cross-sectional views of a first and a second embodiment of a sensor device according to the invention;
- Figure 2:: a photographic representation of a further embodiment of a sensor device according to the invention;
- Figures 3A to 3C:: schematic top views on further embodiments of the sensor device according to the invention;
- Figure 4:: a schematic illustration of a deflection device used according to the invention;
- Figure 5:: a schematic cross-sectional view of a further embodiment of the sensor device according to the invention;
- Figures 6A to 6C:: schematic illustrations of a further embodiment of the sensor device according to the invention;
- Figures 7A and 7B:: schematic illustrations of supporting structures used according to the invention;
- Figure 8: a schematic cross-sectional view of a further embodiment of the sensor device with a sample chamber according to the invention;
- Figure 9: a schematic cross-sectional view of a further embodiment of the sensor device with a sample chamber according to the invention;
- Figure 10: a schematic representation of an embodiment of the measuring device according to the invention;
- Figure 11: a photographic representation of an interference pattern measured with the device according to Figure 10; and
- Figure 12: a schematic representation of an embodiment of the measuring device according to the invention.

The preferred embodiments of the invention are described in the following with reference in particular to the design of the sensor element of a sensor device, the structure of the sensor device with a sample chamber and the structure and operation of the measuring device according to the invention. Details of manufacturing and operating the sensor devices are not described as far as they are known from conventional micro-mechanical systems, like e.g. micro-mechanical sensor devices. It is emphasized that the attached drawings represent schematic, enlarged illustrations. Details as well as relative and absolute sizes of the sensor and measuring devices can be adapted to the particular application of the sensor device by the skilled person.

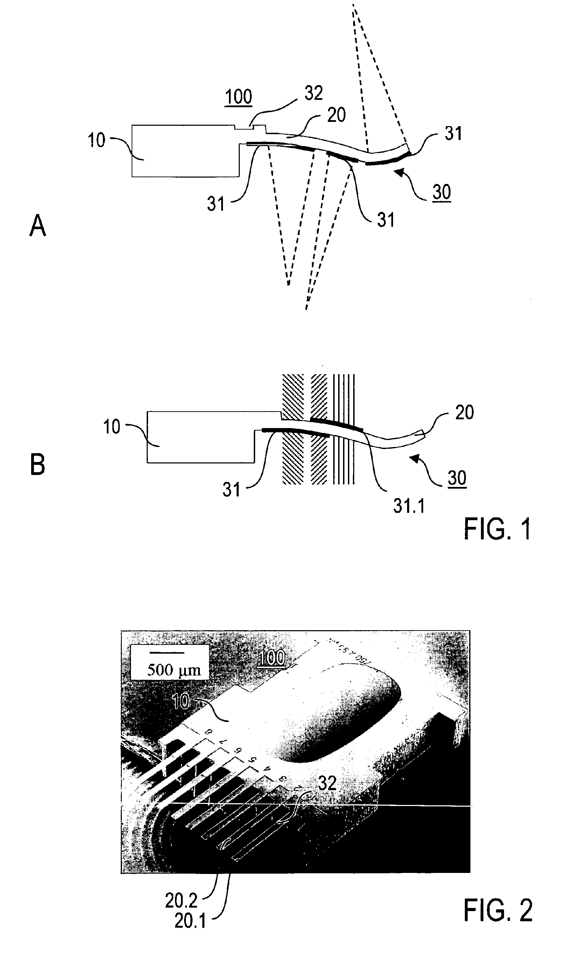

Figure 1A illustrates a first embodiment of a sensor device 100 according to the invention. The sensor device 100 comprises a holding body 10 and a sensor element 20 carrying a sensor array 30 with a plurality of sensitive layers 31. The dashed lines refer to the curvature radii at the sensitive layers 31 with the deflected condition of the sensor element 20.

The holding body 10 and the sensor element 20 are made e.g. from Si, SiN or plastics (e.g. plastic "SU 8") as it is known from prior art cantilever-based sensor devices. The components 10 and 20 are integrally fixed to each other. The sensor element 20 is formed as a strip like a conventional cantilever with a length of e.g. 750 µm to 1 mm and a width in the range of 50 µm to 120 µm. The thickness of the sensor element 20 is typically selected in the range of 500 nm to 5 µm. The integral structure of the holding body 10 with the sensor element 20 is formed e.g. with reactive ion etching or wet chemical etching.

The sensor element 20 has an upper surface corresponding to one surface of the holding body and an opposite lower surface. Typically the sensitive layers 31 are arranged on the lower surface along the length of the sensor element 20, while the upper surface is free for optical measurements. Alternatively, the sensitive layers 31 are arranged on both surfaces along the length of the sensor element 20 as shown in Figure 1B.

The thickness of the sensitive layers is selected in the range of 0.1 nm to several µm, e. g. 10 µm. The materials, number, sizes and positions of the sensitive layers 31 are selected in dependence on the particular application of the sensor device 100. The sensitive layers comprise a material, which changes properties, in particular the surface energy of the sensor element 20 in response to a physical or chemical interaction with a probe substance to be sensed (functionalization of the surface). Changing properties may comprise e. g. surface properties, swelling, conformation changes, electrostatic interactions etc.. As an example, for sensing water vapour, the sensitive layer 31 consist of the polymer PPAA (plasma polymerized polyallylamine), which is expanding in response to an adsorption of water. Further materials for the sensitive layer comprise e.g. self-assembled monolayers, DNA-RNA- or PNA molecules, proteins, antibodies, aptamers etc..

Figure 1A schematically illustrates a calibration structure 32, which is arranged on the holding body 10 and/or the sensor element 20 on a surface, on which the local deflection of the sensor elements 20.1, 20.2, ... is detected, i. e. opposite to the sensitive layers 31. The calibration structure 32 comprises e.g. a recess on the upper surface of the holding body 10. The recess can be used as a reference for the profile measurement, e. g. interferometric or confocal microscopic measurement of the local deflection of the sensor elements. Preferably, the recess has a depth smaller than λ/2 (λ: wavelength of interferometric measurement). Alternatively, the calibration structure may comprise a step on the holding body 10 and/or the sensor element 20.

Figure 1B schematically illustrates a second embodiment of a sensor device 100 according to the invention, wherein the sensor element 20 is carrying a sensor array 30 with a plurality of sensitive layers 31, 31.1 on both surfaces of the sensor element 20. Accordingly, different surface adsorption conditions can be obtained in the various marked regions. In the first and third region, a change of surface stress of the sensor element (e.g. Si) with the sensitive layers 31 or 31.1 can be measured, while in the second (middle) region, a change of surface stress with both sensitive layers 31 and 31.1 can be measured. The second region can be used as a reference field.

Figure 2 illustrates a second embodiment of the sensor device 100, which comprises a plurality (e.g. eight) sensor elements 20.1, 20.2, ..., which are integrally connected with a common holding body 10. With the deposition of four sensitive layers (arranged on the lower surfaces of the sensor elements), the sensor device 100 according to Figure 2 is theoretically capable to sense 64 different molecules. Each of the sensor element 20.1, 20.2, ... has a step providing the calibration structure 32.

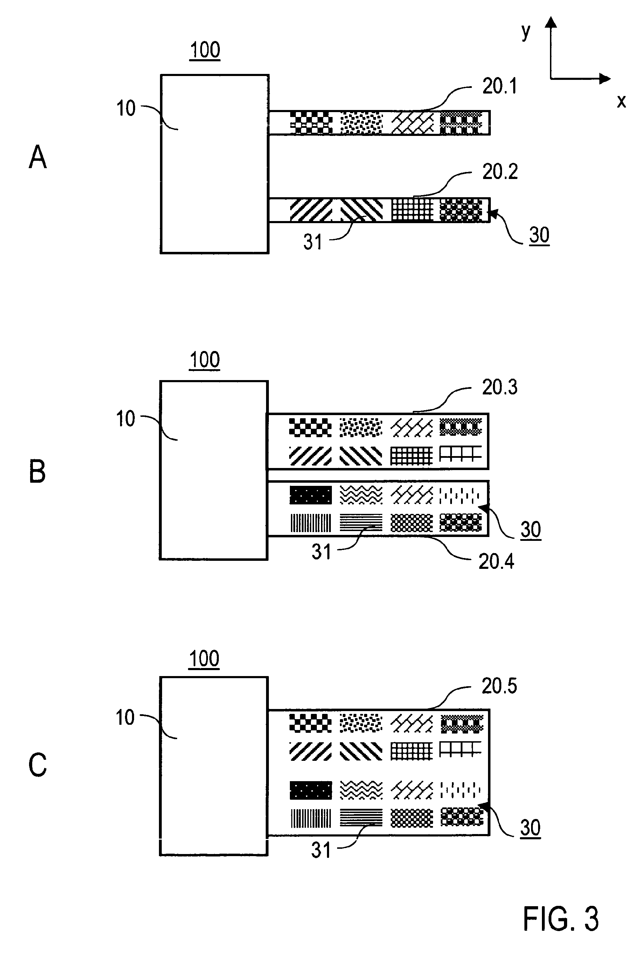

The strip-shaped sensor elements 20.1, 20.2 ... of Figure 2 could be connected to a common membrane sensor element for accommodating even more sensitive layers (see Figure 3C). However, the provision of cantilever-shaped sensor elements, which are separated from each other along their length has an advantage in terms of avoiding any cross talk between sensitive layers of different sensor elements.

Figure 3 illustrates further variations of the sensor device 100 comprising a plurality of strip-shaped sensor elements 20.1, 20.2 each carrying four or more sensitive layers 31 (Figure 3A), a plurality of strip-shaped sensor elements 20.3, 20.4, each carrying a two-dimensional array of sensitive layers 31 (Figure 3B) or a membrane-shaped sensor element 20.5 carrying a two-dimensional sensor array 30 with various sensitive layers 31 (Figure 3C). Further modifications are possible in dependence on the particular application of the sensor device. For example, a plurality of membrane-shaped sensor element 20.5 can be fixed to a common holding body 10 or different types of sensor elements, e.g. 20.1 and 20.5 can be combined within a common holding body.

According to Figure 3A, the strip-shaped sensor elements 20.1, 20.2 have a longitudinal extension parallel to the x-direction. In response to surface stress, the sensor elements are locally bended in the x-z-plane (z-direction perpendicular to the drawing). According to Figures 3B and 3C, the sensor elements 20.3 to 20.5 can be locally bended in the x-z-plane and in the y-z-plane. The capability of two-dimensional bending across the surface even with a strip-shaped (cantilever-shaped) sensor element represents an essential advantage in terms of increasing the sensitivity of deflection read-out.

The sensitive layers 31 are deposited on the sensor elements 20.1, 20.2, ..., e.g. with a jet printing technique like the ink jet technique. With jet printing, sensitive layers 31 with a lateral size of about 50 µm can be deposited. With empty, non-functionalised portions having the same dimension between the sensitive layers 31, about ten to fifteen sensitive layers 31 could be arranged along the length of the sensor element 20.1 from the holding body 10 to the free apex thereof.

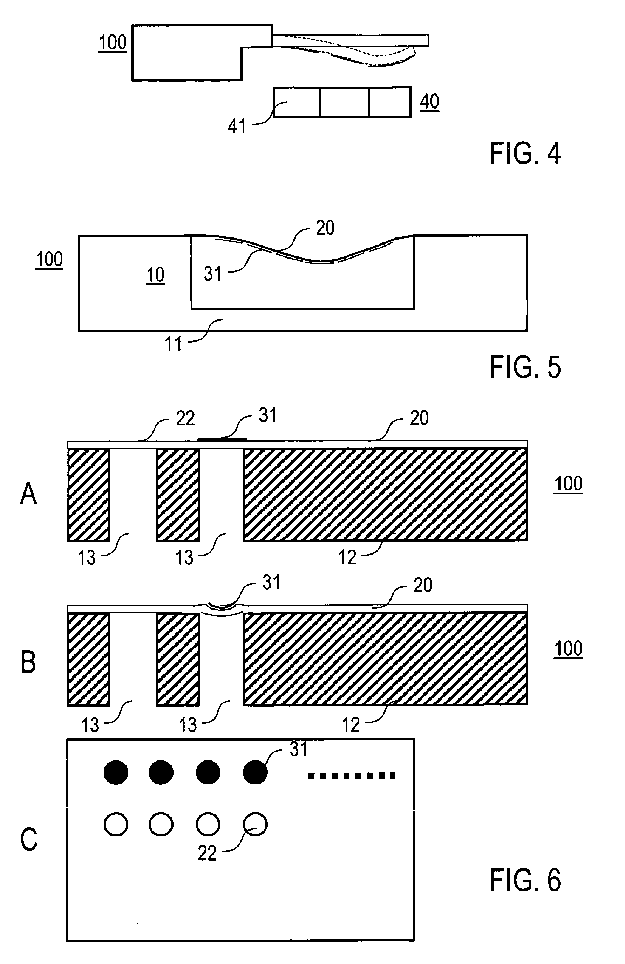

Figure 4 illustrates the function of a deflection device 40, which can be provided for compensating the local deflections of the sensor element 20. The sensor device 40 comprises e.g. a plurality of local heating elements 41 each of which being associated to one of the sensitive layers 31. If the sensor element 20 is deflected in response to an interaction with a probe substance to be sensed, the sensor element 20 can be locally heated for reversing the effect of the increased surface stress. The deflection can be compensated due to different thermal expansion coefficients of the sensor element and sensitive layer materials. The heating elements 41 comprise e.g. resistive heaters or infrared emitting laser diodes. The electrical current necessary for driving the heating elements and compensating the sensor element deflections can be used as a measure of the degree of deflection. Correspondingly, a local deflection and even a local curvature radius can be detected.

Figure 5 illustrates a further embodiment of the invention wherein a cantilever-shaped or membrane-shaped sensor element 20 is fixed with two opposite sides to the holding body 10. The holding body 10 comprises a frame structure with a common support 11. The sensitive layers 31 are arranged on the lower surface of the sensor element 20 facing to the support 11. Accordingly, a free surface of the sensor element 20 is exposed for optical measurements of local deflections.

Figure 6 illustrates a further embodiment of the sensor device 100 according to the invention with a cross-sectional view without (Figure 6A) or with (Figure 6B) an interaction with a probe substance to be sensed and with a top view (Figure 6C) on circular sensitive or reference portions of the sensor element 20. With this embodiment, the holding body 10 comprises a compact carrier block 12 with through-holes 13. On one plane side of the carrier block 12, the membrane-shaped sensor element 20 is fixed, e.g. with an adhesive layer. The carrier block 12 comprises e.g. silicon, while the sensor element 20 is made of a gold layer. The sensor device 100 can be manufactured by depositing the adhesive layer and the gold layer on the surface of the carrier block 12 and subsequently etching the cylindrical through-holes 13.

The sensitive layers 31 are deposited on the sensor element 20 according to the predetermined positions of the through-holes 13, while the reference portions 22 of the sensor element 20 remain empty for reference purposes. With a straight double-row of through-holes 13, the top-view of Figure 6C shows a plurality of sensitive layers 31 and corresponding reference portions 22 of the sensor element 20. The bending of the sensor element 20 can be monitored from the upper, free surface of the sensor device 100 or from below through the through-holes 13.

The embodiment of Figure 6 has the following particular advantages. Firstly, the sensor element 20 is exposed from one single side to the liquid or gas including the probe substance only. Accordingly, the sensor element deflection can be monitored from the other side without the influence of the sample. Furthermore, the above deflection device can be provided by a positive or negative pressure source. By subjecting the through-holes 13 to a positive or negative pressure, the bending of the sensor element 20 can be selectively compensated.

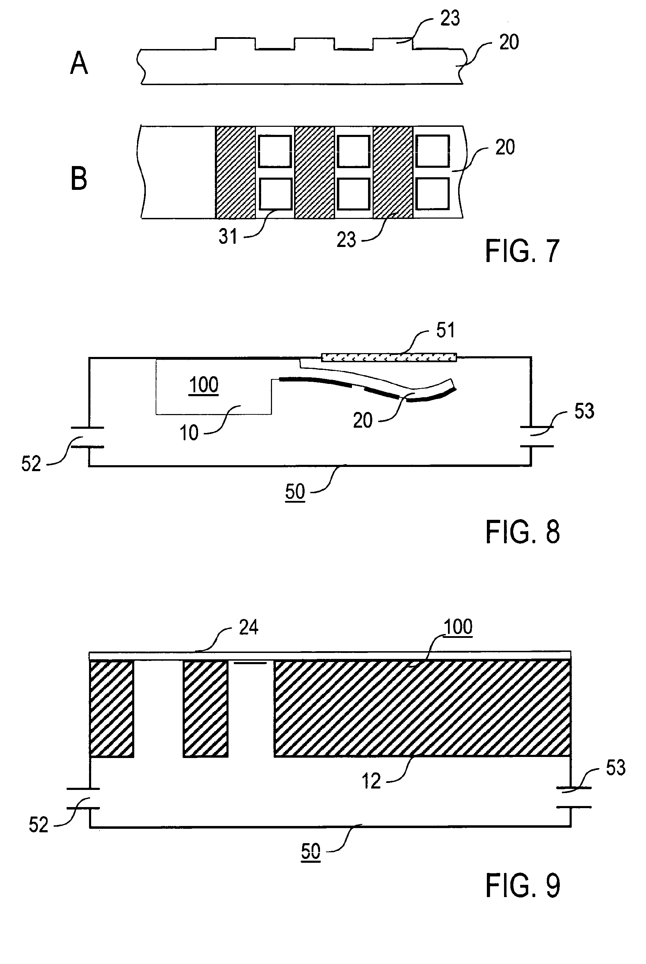

Figure 7 schematically illustrates the provision of support structures 23 on at least one surface of the sensor element 20 with a side view (Figure 7A) and a top view (Figure 7B). The support structures comprise web profiles 23 extending perpendicular to the longitudinal direction of the sensor element 20. Accordingly, any bending of the sensor element perpendicular to the longitudinal extension thereof can be avoided. In the plane portions between the support structures 23, the sensitive layers 31 are arranged. With this embodiment, the capability of two-dimensional bending across the surface of the sensor element is abandoned, which can represent an advantage in terms of reducing cross-talk of different sensitive layers.

Typically, the web profiles 23 have a thickness in the range of 100 nm to 5 µm and a width in the range of 500 nm to 20 µm. The web profiles 23 are integrally formed with the sensor element 20. Advantageously, the web profiles 23 could be used as calibration structures described above.

Figures 8 and 9 illustrate two embodiments of sensor devices 100 provided with a sample chamber 50. According to Figure 8, the sample chamber 50 comprises a transparent window 51 (made of e.g. glass), a sample inlet 52 and a sample outlet (53). The sensor device 100 is arranged in the sample chamber 50 such that the upper surface of the at least one sensor element 20 can be optically monitored through the window 51. The walls of the sample chamber 50 are made of e.g. plastic or another inert material, like e.g. glass. The above deflection device 40 (see Figure 4) can be integrated into the sample chamber 50.

According to the embodiment of Figure 9, one wall of the sample chamber 50 is formed by the sensor device 100 including the holding body 10 with the compact carrier block 12. Advantageously, the embodiment of Figure 9 allows a direct measurement on the upper surface 24 of the sensor element 20, so that any distortions by the sample can be avoided.

Furthermore, this embodiment can be adapted for one-way use. The sample could be introduced into the sample chamber 50, while the outer surface remains unexposed. The complete sensor device 100 could be adjusted in a measurement device for read-out of the local sensor element deflections.

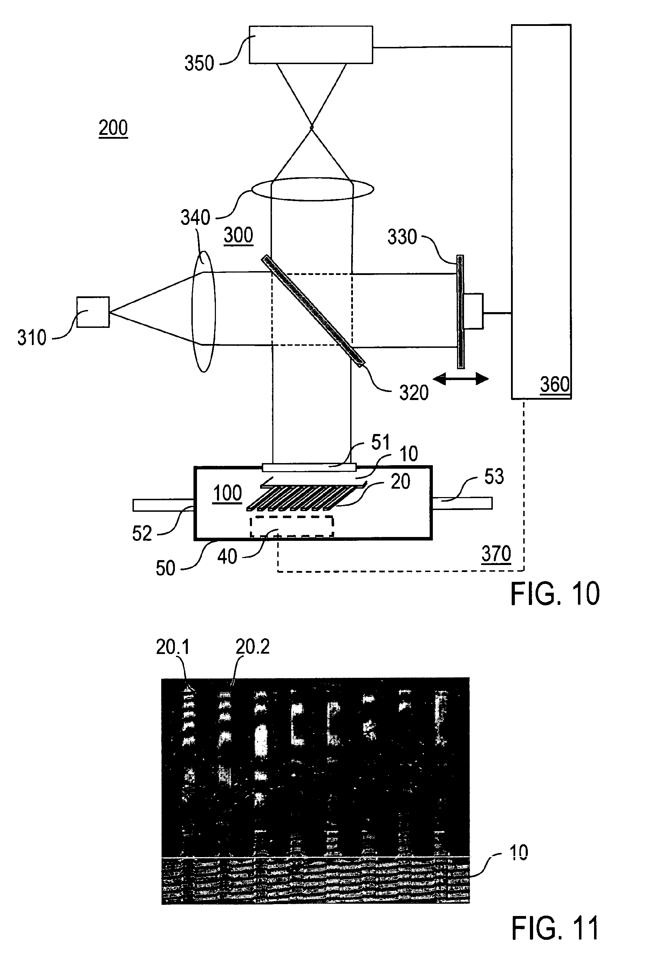

Figure 10 illustrates an embodiment of the measuring device 200 according to the invention. The measuring device 200 comprises the sensor device 100 and as an optical profilometer the imaging interferometer device 300. The sensor device 100 includes at least one sensor element 20 fixed to the holding body 10 as described above. The at least one sensor element 20 is arranged in the sample chamber 50 having the transparent monitoring window 51, the sample inlet 52 and the sample outlet 53.

The interferometer device 300 comprises a light source 310, a beam splitting element 320, a shiftable mirror 330, an imaging optic 340, a camera device 350 and a control device 360. The interferometer device 300 is e.g. a white light interferometer or an interferometer with one or more single wavelengths, like e.g. a phase shift interferometer. Preferably, the light source device 210 comprises a laser source emitting at one or multiple wavelengths. The laser source may comprise one single laser emitting at a plurality of wavelengths or a plurality of lasers with different wavelengths. The camera device 350 comprises a CCD camera with a CCD matrix including at least one row of 300 pixels.

If the sensor device 100 is equipped with the deflection device 40 (dashed lines), a feedback loop 370 can be provided wherein the deflection device 40 is controlled with the control device 360 for a local compensation of deflections at the sensor elements 20 until all surfaces of the sensor elements 20 are plane. This condition can be monitored by imaging the interference pattern of the surfaces of the sensor elements 20 with the camera device 350.

Investigating a sample for sensing at least one probe molecule in the sample comprises the following steps. With a preparation step, a first reference image is taken including the interference pattern of the non-loaded sensor elements 20. Ideally, the interference pattern does not show any interference stripes, as all surfaces of the sensor elements 20 are plane and perpendicular to the beam path of the illumination light in the interferometer device 300. After storing the reference image, the sample to be investigated is introduced into the sample chamber 50 via the sample inlet 52. In response to an interaction of the probe substance to be sensed with at least one of the sensitive layers on the sensor elements 20, a local deflection is caused. Accordingly, the interference pattern is changed.

Figure 11 illustrates an example of a curvature pattern (interference pattern) measured with a sensor device 100 as shown in Figure 2. The sensor elements 20.1, 20.2, ... have different functional coatings so that a non-uniform interference pattern is formed. The interference pattern is evaluated and processed with the control device 360. The control device 360 includes an image processing unit running an interference stripe analysis software on the basis of which the local curvature radii can be calculated.

Finally, the calculated local curvature radii are compared with reference values stored e.g. in the control device 360. As a result of the comparison, the positions of sensitive layers showing an interaction are provided leading to a listing of probe substances detected in the sample.

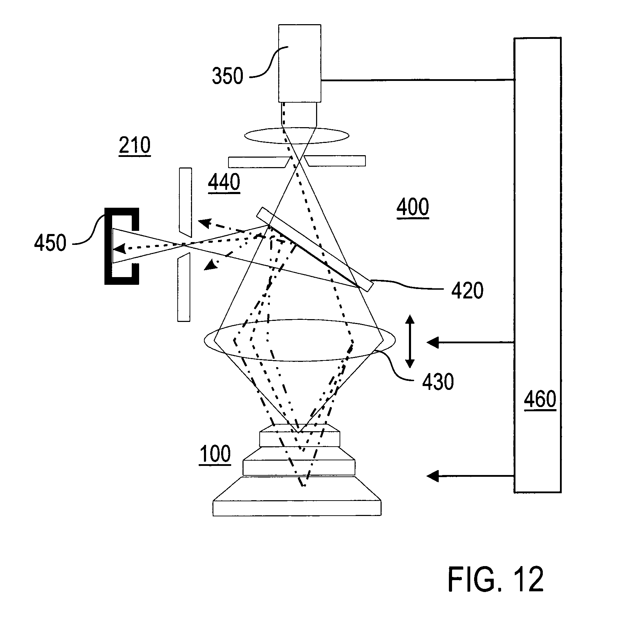

Figure 12 illustrates a further embodiment of the measuring device 210 according to the invention. The measuring device 210 comprises the sensor device 100 (partially shown) and as an optical profilometer the confocal microscope 400. The sensor device 100 includes sensor elements 20.1, 20.2, 20.3, ... being fixed to the holding body in the sample chamber (not shown) as described above. If the sensor device 100 is equipped with a deflection device, a feedback loop can be provided as described above.

The confocal microscope 400 is used like a conventional scanning profilometer. It comprises a light source 410, a beam splitting element 420, a shiftable objective lens 430, apertures 440 for confocal imaging, a camera device 450 and a control device 460. Preferably, the light source 410 comprises a laser source emitting at one or multiple wavelengths. The objective lens can be adapted for providing multiple illumination paths towards the sensor elements allowing a parallel reading of the sensor elements. The camera device 450 comprises a e. g. CCD chip.

Evaluating a curvature pattern of the sensor elements with the confocal microscope 400 is based on the following concept. The sensor element is illuminated with illumination light from the light source 410. With the first aperture and the objective lens 430, at least one light spot is formed on the at least one sensor element. Depending on a local bending state of the sensor element, i. e. depending on the relative position of the surface of the sensor element and the focus of the illumination light, the light spot has a certain size or intensity. With various positions of the shiftable objective lens 430, a plurality of light spot sizes or intensities (e. g. 100 to 200) can be measured with the camera device 450. With a complete confocal imaging, a stack of sectional images is obtained. Accordingly, local focus levels of the sensor element can be calculated. On the basis of all focus levels of all sensitive layers of all sensor elements, a complete topography or image can be calculated and evaluated in analogy to the above interferometric measurement.

The features of the invention disclosed in the above description, the drawings and the claims can be of significance both individually as well as in combination for the realization of the invention it its various embodiments.

## Claims

**1.** Sensor device (100), comprising:
- a holding body (10),
- at least one deflectable sensor element (20, 20.1, 20.2, 20.3, 20.4, 20.5) fixed to the holding body (10), and
- a sensor array (30) with a plurality of sensitive layers (31) arranged on a surface (21) of the at least one sensor element (20, 20.1, 20.2, 20.3, 20.4, 20.5), wherein each of the sensitive layers (31) is adapted to couple at least one probe substance to be sensed,
**characterized in that**
- the at least one sensor element (20, 20.1, 20.2, 20.3, 20.4, 20.5) has a spring constant below 5 N/m.

**2.** Sensor device according to claim 1, wherein the sensor array (30) comprises a straight sequence of sensitive layers (31).

**3.** Sensor device according to claim 1 or 2, wherein the sensor array (30) comprises a 2-dimensional arrangement of sensitive layers (31).

**4.** Sensor device according to at least one of the foregoing claims, wherein a calibration structure (32) is arranged on the surface (21) of the holding body (10) or on the at least one sensor element (20, 20.1, 20.2, 20.3, 20.4, 20.5).

**5.** Sensor device according to at least one of the foregoing claims, further comprising a deflection device (40) adapted for compensating deflections of the at least one sensor element (20, 20.1, 20.2, 20.3, 20.4, 20.5).

**6.** Sensor device according to claim 5, wherein the deflection device (40) includes at least one of a heating device, a magnetic field device, an electrostatic field device, an actuator device and a pressure device.

**7.** Sensor device according to at least one of the foregoing claims, wherein the at least one sensor element (20, 20.1, 20.2, 20.3, 20.4, 20.5) is fixed with one single base portion to the holding body (10).

**8.** Sensor device according to at least one of the foregoing claims, wherein the at least one sensor element (20, 20.1, 20.2, 20.3, 20.4, 20.5) is fixed with at least two end portions to the holding body (10).

**9.** Sensor device according to at least one of the foregoing claims, wherein the holding body (10) comprises a compact carrier block (12) with through-holes (13) and the at least one sensor element (20, 20.1, 20.2, 20.3, 20.4, 20.5) is fixed on a surface of the carrier block so that the through-holes are covered by the at least one sensor element (20, 20.1, 20.2, 20.3, 20.4, 20.5).

**10.** Sensor device according to at least one of the foregoing claims, wherein the sensor element (20, 20.1, 20.2, 20.3, 20.4, 20.5) has at least one support structure provided at at least one predetermined support position along a longitudinal extension of the sensor element (20, 20.1, 20.2, 20.3, 20.4, 20.5).

**11.** Sensor device according to claim 10, wherein the support structure comprises a web profile extending perpendicular to the longitudinal extension of the sensor element (20, 20.1, 20.2, 20.3, 20.4, 20.5).

**12.** Sensor device according to at least one of the foregoing claims, wherein the holding body (10) with the at least one sensor element (20, 20.1, 20.2, 20.3, 20.4, 20.5) is arranged in a chamber (50) having at least one transparent window (51).

**13.** Sensor device according to claim 12, wherein the chamber (50) is liquid-tight.

**14.** Sensor device according to claim 12 or 13, wherein one wall of the chamber (50) is provided by the holding body (10) and the at least one sensor element (20, 20.1, 20.2, 20.3, 20.4, 20.5).

**15.** Sensor device according to at least one of the foregoing claims, wherein the sensor array (30) comprises at least four sensitive layers (31).

**16.** Sensor device according to at least one of the foregoing claims, comprising at least one of the following features:
- the spring constant is below 2 N/m,
- the at least one sensitive layer (31) has a lateral extension selected in range of 100 µm to 5 µm,
- the at least one sensor element (20, 20.1, 20.2, 20.3, 20.4, 20.5) has a thickness below 2 µm, and
- the at least one sensor element (20, 20.1, 20.2, 20.3, 20.4, 20.5) has a length above 200 µm.

**17.** Sensor device according to at least one of the foregoing claims, wherein the sensor array (30) comprises sensitive layers (31, 31.1) arranged on opposite surfaces (21, 21.1) of the at least one sensor element (20).

**18.** Sensor device according to claim 17, wherein the sensitive layers (31, 31.1) are arranged on the opposite surfaces (21, 21.1) with a partial overlap relative to each other.

**19.** Measuring device (200, 210) for sensing at least one probe substance, comprising:
- a sensor device (100) according to at least one of the foregoing claims, and
- an optical profilometer device (300, 400) for optically measuring a deflection of the at least one sensor element (20, 20.1, 20.2, 20.3, 20.4, 20.5) of the sensor device (100).

**20.** Measuring device according to claim 19, further comprising a feedback loop (370) being adapted for controlling the deflection device (40) of the sensor device (100) in dependence on an output signal of the profilometer device (300, 400).

**21.** Measuring device according to claim 19 or 20, wherein the profilometer device (300, 400) is adapted for simultaneous measuring the deflections of a plurality of sensor elements (20, 20.1, 20.2, 20.3, 20.4, 20.5) of the sensor device (100).

**22.** Measuring device according to at least one of the claims 19 to 21, wherein the profilometer device (300, 400) is adapted for simultaneous measuring the deflections of sensor elements (20, 20.1, 20.2, 20.3, 20.4, 20.5) of the sensor device (100) and detecting a calibration structure (32) on the surface (21) of the holding body (10) or on the at least one sensor element (20, 20.1, 20.2, 20.3, 20.4, 20.5).

**23.** Measuring device according to at least one of the claims 19 to 22, wherein the profilometer device (300, 400) is connected with an image processing unit for evaluating curvature patterns formed by the sensor elements (20, 20.1, 20.2, 20.3, 20.4, 20.5).

**24.** Measuring device according to at least one of the claims 19 to 23, wherein the profilometer device comprises at least one of:
- an interferometer device (300), and
- a confocal microscope (400).

**25.** Method of investigating a sample for sensing at least one probe molecule in the sample, comprising the steps of:
- applying the sample to a sensor device (100) according to at least one of the claims 1 to 18, and
- measuring a deflection of the at least one sensor element (20, 20.1, 20.2, 20.3, 20.4, 20.5) of the sensor device (100) with an optical profilometer device (300, 400).

**26.** Method according to claim 25, wherein the measuring step comprises the steps of:
- collecting at least one image of the at least one sensor element (20, 20.1, 20.2, 20.3, 20.4, 20.5), and
- evaluating light curvature patterns of the image for obtaining a curvature of the at least one sensor element (20, 20.1, 20.2, 20.3, 20.4, 20.5).

**27.** Method according to claim 28, wherein the evaluating step comprises obtaining the curvature in at least one of a longitudinal and a cross direction of the at least one sensor element (20, 20.1, 20.2, 20.3, 20.4, 20.5).

**29.** Method according to claim 25, wherein the measuring step comprises the steps of:
- collecting at least one image of the at least one sensor element (20, 20.1, 20.2, 20.3, 20.4, 20.5),
- controlling the deflection device (40) of the sensor device (100) with a set of compensation signals for compensating deflections of the at least one sensor element (20, 20.1, 20.2, 20.3, 20.4, 20.5) so that the image does not contain a curvature pattern, and
- determining a curvature of the at least one sensor element (20, 20.1, 20.2, 20.3, 20.4, 20.5) on the basis of the compensation signals.

**30.** Method according to at least one of the claims 26 to 29, wherein the image collecting step comprises the step of:
- collecting one image of a plurality of sensor elements (20, 20.1, 20.2, 20.3, 20.4, 20.5).
